# EUROPÄISCHE PATENTSCHRIFT

(11) **EP 4 613 718 B1**
(45) Veröffentlichungstag und Bekanntmachung des Hinweises auf die Patenterteilung: **14.10.2026**
(21) Anmeldenummer: 25160382.5
(22) Anmeldetag: 26.02.2025
(51) Int. Cl.: C03B 9/353

(54) **FORMENANORDNUNG FÜR EINE IS-MASCHINE**
MOULD ASSEMBLY FOR AN IS MACHINE
ENSEMBLE MOULE POUR MACHINE IS

(30) Priorität: 04.03.2024 DE 102024106198
(43) Veröffentlichungstag der Anmeldung: 10.09.2025
(73) Patentinhaber: Heye International GmbH, 31683 Obernkirchen (DE)
(72) Erfinder: Felgenhauer, Benedikt, 32049 Herford (DE); Ulbricht, Jonas, 31707 Bad Eilsen (DE); Möller, Eckhard, 31683 Obernkirchen (DE); Lunacek, Matthias, 31683 Obernkirchen (DE)
(74) Vertreter: Michalski Hüttermann & Partner mbB

(56) Entgegenhaltungen:
- GB-A- 2 324 298
- US-B2- 7 024 887

## Beschreibung

Die Erfindung geht aus von einer Formenanordnung für eine IS-Maschine, mit einer ersten Reihe einer Mehrzahl von nebeneinander angeordneten Formenhälften und einer zweiten Reihe einer Mehrzahl von nebeneinander angeordneten Formenhälften, wobei die Formenhälften der beiden Reihen einander gegenüberstehen und dabei jeweils eine Formenhälfte der ersten Reihe und eine Formenhälfte der zweiten Reihe in einem solchen Sinne einander zugeordnet sind, als dass sie gemeinsam eine geschlossene Form bilden können, und einem Formenschließmechanismus, mit dem die Formenhälften der ersten Reihe und die Formenhälften der zweiten Reihe reversibel von einer Stellung einander zugeordneter Formenhälften im Abstand zueinander zu einer Stellung zusammengeführt werden können, in der einander zugeordnete Formenhälften eine geschlossene Form bilden, wobei der Formenschließmechanismus eine erste Übertragungseinrichtung aufweist, mit der auf die Formenhälften der ersten Reihen eine Kraft zum Zusammenführen der Formenhälften der beiden Reihen ausübbar ist.

IS-Maschinen zur Herstellung von Glasbehältern sind aus dem Stand der Technik bereits seit Jahrzehnten bekannt. Die Funktion einer IS-Maschine stellt sich typischerweise wie folgt dar:
In einer Wanne wird Glas geschmolzen, das über eine Rinne (Feeder-Kanal) geleitet wird. Am Ende des Feeder-Kanals befindet sich ein Glasauslass (Spout), in dem mittels eines Rührwerkes oder einer drehenden Tube das Glas homogenisiert wird. Die Tube dient außerdem zur Dosierung des Glasausflusses. Ein Plunger presst das Glas aus dem Spout, wobei beim Rückzug des Plungers ein portionierter Glasposten (Tropfen) durch eine Schere (ab-)geschnitten wird.

Die geschnittenen Glasposten (Tropfen) werden im freien Fall einem Tropfenverteiler zugeführt. Der Tropfenverteiler hat die Aufgabe, die Tropfen an die entsprechenden Verarbeitungsstationen (individual sections, IS) weiterzuleiten. Über dem Tropfenverteiler befindet sich ein Tropfenabweiser, der die Zuführung der Tropfen zur Sektion verhindert, wenn diese außer Betrieb ist oder die Tropfen aus anderen Gründen nicht geladen werden sollen. Vom Tropfenverteiler führen Rinnen zu den Sektionen, die die Tropfen zu Vorformen der Sektion leiten. In der Sektion wird in einem zweistufigen Prozess aus dem Tropfen ein Behälter geformt. In einer ersten Stufe auf der Vorformseite wird aus dem Tropfen ein Vorformling geformt. Dieser Formungsschritt kann sowohl durch Pressen als auch durch Blasen erfolgen. Dieser Vorformling wird mit einem Übergabemechanismus auf die Fertigformseite geschwenkt. Dort wird er in einer zweiten Stufe in seine Endform geblasen und damit entsteht ein Behälter. In beiden Prozessstufen wird das Glas kontinuierlich abgekühlt, so dass es in einem formstabilen Zustand aus der Fertigform entnommen werden kann. Da sich die abgekühlten Oberflächen des Glasbehälters aus dem Inneren zurückerwärmen, muss der Behälter weiterhin gekühlt werden. Dies erfolgt auf einer Absetzplatte, auf welche die Behälter nach der Entnahme aus der Fertigform abgesetzt werden.

Beim Behältertransport werden die in den Sektionen einer IS-Maschine produzierten Glasbehälter von der Absetzplatte zu einem Kühlofen transportiert. Sie werden von den Absetzplatten der Sektionen auf ein Maschinenband geschoben und in der Regel an einer Umlenkecke auf ein Querband übergeschoben. Vom Querband werden sie schließlich durch einen Einschieber in den Kühlofen gebracht.

Hinsichtlich der Vorformen und der Fertigformen sind in der Regel immer mehrere Formenhälften in einer Reihe angeordnet. Geschlossene Formen werden durch das Zusammenführen zweier einander zugeordneter und typischerweise spiegelsymmetrischer Formenhälften gebildet. Die Formenhälften werden während des Fertigungsprozesses der Glasbehälter periodisch aufeinander zu und voneinander weg bewegt. Wenn die Formenhälften aufeinander zu geführt werden, entstehen mehrere umfangsmäßig geschlossene Hohlräume, in denen der Glasformprozess stattfinden kann. Dabei ist es gewünscht, dass die Formenhälften möglichst dicht bzw. formschlüssig zusammengeführt werden. Dass gleichzeitig durch das Zusammenführen der Formenhälften eine Mehrzahl Formen gebildet werden, bringt eine gewisse Ungenauigkeit mit sich. Es stellt nämlich eine Herausforderung dar, diese Formenhälften so zusammen zu führen, dass jede einzelne auf diese Weise gebildete geschlossene Form dicht und formschlüssig ist. Aufgrund von Fertigungstoleranzen der Formenhälften und mechanischer Einwirkung des Schließmechanismus auf die Formenhälften können also einige der Formen bereits geschlossen sein, während andere Formen noch einen Spalt zwischen den Formenhälften aufweisen. Die geschlossenen Formen können so das vollständige Schließen weiterer Formen verhindern. Eine gewisse Anzahl der Formen kann also im eigentlich geschlossenen Zustand mit einem Spalt verbleiben, der sich nachteilig auf den Produktionsprozess auswirkt.

Die US 7,024,887 B2 beschreibt ein Verfahren und eine Maschine für die Produktion von Hohlglasartikeln. In diesem Dokument ist ein Formenhaltemechanismus gezeigt, der zwei schwenkbare Formenhalterarme zeigt, die nach der Art einer Zange aufeinander zu bewegt werden können. Jeder dieser beiden Arme ist mit je einem einzelnen Vorformenhalter und je einem Doppelvorformenhalter versehen. Der Vorformenhalter trägt eine einzelne Vorformhälfte. Der Doppelvorformenhalter trägt entsprechend zwei Vorformhälften. Der Vorformenhalter und der Doppelvorformenhalter sind auf dem einzelnen Formenhalterarm an einem Ausgleichsträger angebracht, mit dem sich die Vorformhälften gleichmäßig und mit einer ähnlichen Schließkraft schließen lassen. Mit dem Ausgleichsträger sind die Vorformen über einen Stift an den Formenhaltern schwenkbar gelagert. Es wird also ein Ausgleichsträger vor, mit dem die Vorformen gleichmäßig zusammengeführt werden können. Dieser Ausgleichsträger hat die Aufgabe, die unterschiedlichen Abstände zwischen den Vorformenhälften zu regulieren, die aufgrund der zangenartigen Stellung der Formenhalterarme auftreten.

Die DE 21 18 132 B zeigt einen Antrieb für Elemente, z. B. Pressstempel und Formzangen, glasverarbeitender Maschinen, mit einer relativ zu dem jeweiligen Element bewegbaren Kurvenbahn und einer in der Kurvenbahn ablaufenden, mit dem Element verbundenen Antriebsrolle, wobei zwischen die Antriebsrolle und das Element ein Servomotor eingeschaltet ist.

Aus der DE 26 09 651 C2 ist ein Formwerkzeug einer Maschine zur Verarbeitung schmelzflüssigen Glases, mit wenigstens einem geteilten Formmittelstück, das an einer entsprechend geteilten, quer zu seiner Längsachse bewegbaren Betätigungsvorrichtung mit Spiel und in zwei in axialem Abstand voneinander angeordneten Führungsebenen durch Führungselemente in Querrichtung geführt aufgehängt ist, bekannt. Dabei wirkt die gesamte Kraft zum Zuhalten der zusammengehörenden Formmittelstückteile durch die Betätigungsvorrichtung in nur einer Ebene und die Wirkungslinie der resultierenden Zuhalteteilkraft für jedes Formmittelstückteil liegt in der Anwendungsebene. Außerdem gilt, dass die Wirkungslinie der resultierenden Aufdrückteilkraft des betreffenden Formmittelstückteils zumindest annähernd mit der Wirkungslinie der resultierenden Zuhalteteilkraft zusammenfällt.

Die CN 2 13 012 546 U beschreibt eine Formvorrichtung, die eine Basis, eine Montage-Nut, eine Entformstruktur, einen Luftzylinder und einen linken Formkörper umfasst. Die Montage-Nut ist an einer Seite des oberen Endes der Basis ausgebildet. Die Entformstrukturen sind an den beiden Seiten des Inneren der Montage-Nut angeordnet. Ein erstes Stützgestell ist an einer Seite des oberen Endes der Basis befestigt, und ein zweites Stützgestell ist an der anderen Seite des oberen Endes der Basis angebracht. Eine Stützachse ist gleitend an einer Seite des Inneren des ersten Stützgestells montiert. Am Ende der Stützachse, das von der Außenwand des ersten Stützgestells wegführt, ist ein linker Formkörper angebracht. Eine Begrenzungsfeder ist an einer Seite der Oberfläche der Stützachse gewickelt. Eine Verbindungsplatte ist an der Position auf einer Seite der Begrenzungsfeder auf der Oberfläche der Stützachse befestigt, und ein Luftzylinder ist an der Außenwand einer Seite der Verbindungsplatte montiert. Ein zweites Stützgestell ist an einer Seite des oberen Endes der Basis befestigt.

Gemäß der GB 2 324 298 A tragen in einer Glasformmaschine Formtragarme die Formhälften, die entlang einer Mittelebene gegeneinander schließen, sodass eine oder mehrere Formhöhlungen entstehen. Mindestens eine Formhälfte ist so gelagert, dass sie sich gegen Federkraft und nur in eine Richtung senkrecht zur Mittelebene begrenzt bewegen kann.

In Kombination mit einer geteilten Form, die erste und zweite zusammenwirkende Formhälften umfasst, welche durch gemeinsame Schwenk- oder Scharniervorrichtungen gestützt sind, um eine Bewegung dieser Formhälften zwischen offenen und geschlossenen Positionen der Form zu ermöglichen, umfasst eine aus der der US 3 499 747 A bekannte Vorrichtung das Folgende: erste und zweite ähnliche Verbindungsstreben, deren erste Enden über ähnliche erste Schwenkvorrichtungen an den äußeren Umfangsbereichen der jeweiligen ersten und zweiten Formhälfte an entsprechenden Positionen befestigt sind; erste und zweite identische Federanordnungen, die jeweils mindestens ein langgestrecktes, elastisches und federndes Federmodul umfassen, wobei die ersten Enden dieser Module über ähnliche zweite Schwenkvorrichtungen mit den zweiten Enden der jeweiligen ersten und zweiten Verbindungsstreben verbunden sind; und eine Einrichtung, die in Übereinstimmung mit der Mitte der gemeinsamen Schwenkvorrichtungen hin- und herbeweglich ist und die fest mit den zweiten Enden der Federmodule verbunden ist, um entsprechende Hin- und Herbewegungen zu übertragen und die Formhälften zwischen den offenen und geschlossenen Positionen der Form zu bewegen. Während des Schließvorgangs der Form liefern die Federmodule über die Verbindungsstreben Kräfte, die sich im Wesentlichen direkt gegeneinander ausrichten, um die Form in ihrer geschlossenen Position zu halten.

Es ist die Aufgabe der Erfindung, eine Formenanordnung für eine IS-Maschine anzugeben, die eine verbesserte Schließcharakteristik zeigt.

Diese Aufgabe wird durch den Gegenstand des Patentanspruchs 1 gelöst. Bevorzugte Weiterbildungen finden sich in den Unteransprüchen.

Erfindungsgemäß wird somit eine Formenanordnung für eine IS-Maschine bereitgestellt, mit einer ersten Reihe einer Mehrzahl von nebeneinander angeordneten Formenhälften und einer zweiten Reihe einer Mehrzahl von nebeneinander angeordneten Formenhälften, wobei die Formenhälften der beiden Reihen einander gegenüberstehen und dabei jeweils eine Formenhälfte der ersten Reihe und eine Formenhälfte der zweiten Reihe in einem solchen Sinne einander zugeordnet sind, als dass sie gemeinsam eine geschlossene Form bilden können, und einem Formenschließmechanismus, mit dem die Formenhälften der ersten Reihe und die Formenhälften der zweiten Reihe reversibel von einer Stellung einander zugeordneter Formenhälften im Abstand zueinander zu einer Stellung zusammengeführt werden können, in der einander zugeordnete Formenhälften eine geschlossene Form bilden, wobei der Formenschließmechanismus eine erste Übertragungseinrichtung aufweist, mit der auf die Formenhälften der ersten Reihen eine Kraft zum Zusammenführen der Formenhälften der beiden Reihen ausübbar ist, und zwischen der ersten Übertragungseinrichtung und den Formenhälften der ersten Reihe Primärkompensatoren angeordnet sind, die beim Zusammenführen der Formenhälften der beiden Reihen elastisch verformbar sind, wobei die Formenhälften der ersten Reihe jeweils unter Zwischenschaltung eines Sekundärkompensators an einem Formenhalter befestigt sind, wobei die Formenhalter ihrerseits zur Kraftübertragung mit Primärkompensatoren gekoppelt sind und die Sekundärkompensatoren beim Zusammenführen der Formenhälften der beiden Reihen ebenfalls elastisch verformbar sind. Vorzugsweise weisen dabei die Sekundärkompensatoren jeweils eine Mehrzahl von Einzelkompensatoren auf, so dass über die Anzahl der Einzelkompensatoren die auf eine jeweilige Formenhälfte übertragene Kraft einstellbar ist. Die Einzelkompensatoren bestehen vorzugsweise aus metallischen Omega-Federn.

Die einander zugeordnete Formenhälfte bilden vorzugsweise gemeinsam eine Vorform oder eine Fertigform. Für einen prozesssicheren Betrieb solcher Vorformen bzw. Fertigformen ist es vorteilhaft, wenn alle Formenhälften gleichmäßig und mit einer definierten Mindestkraft schließen. Durch Fertigungstoleranzen sowie unterschiedlicher Wärmeausdehnungen kann es jedoch passieren, dass sich nicht alle Formenhälftenpaare beim Schließen zur gleichen Zeit berühren. Wäre das gesamte System starr, würden also keine Primärkompensatoren verwendet, würden nur die Formenhälften korrekt schließen, die sich zuerst berühren. Die anderen Formenhälften könnten sich danach nicht mehr berühren. Durch die Verwendung der Primärkompensatoren wird dies vermieden, indem sich die Primärkompensatoren der Formenhälften, die sich zuerst berühren, etwas mehr verformen als die der Formenhälften, die sich später berühren. Vorzugsweise sind die Primärkompensatoren als metallische, gefräste und gehärtete Teile ausgestaltet, so dass Primärkompensatoren aus einem flexiblen Material mit sehr gutem Rückstellverhalten und definierter Federkonstante erzielt werden.

Ähnlich wie beim zuvor beschriebenen Ausgleich von Toleranzen gleichen die Kompensatoren den Verschleiß der Formenhälften beim Schließen derselben aus. Sobald die Formenhälften an ihrer Trennfuge unterschiedlich schnell bzw. unterschiedlich stark verschleißen, ergeben sich unterschiedliche Schließzeitpunkte der Formenhälften beim Zufahren. Genau wie zuvor erwähnt, könnte ein korrektes Schließen der einzelnen Formen in einem starren System nicht gewährleistet werden. Durch die Flexibilität der Primärkompensatoren wird dies vermieden.

Grundsätzlich kann die erste Übertragungseinrichtung auf unterschiedliche Weisen ausgestaltet sein. Gemäß einer bevorzugten Weiterbildung der Erfindung weist die erste Übertragungseinrichtung eine Kurbelwelle auf und die Primärkompensatoren sind derart ausgestaltet, dass die Kurbelwelle zusammen mit den Primärkompensatoren als Kniehebel wirkt, mit dem eine jeweilige Kraft von der ersten Übertragungseinrichtung auf die-Formenhälften der ersten Reihe ausübbar ist. Dabei gilt vorzugsweise, dass die Kurbelwelle über ein Pleuel antreibbar ist, wobei das Pleuel vorzugsweise über ein Schneckengetriebe mit einem Servomotor gekoppelt ist. Auch wenn grundsätzlich eine einzige Kurbelwelle ausreichend wäre, so gilt gemäß einer bevorzugten Weiterbildung der Erfindung, dass die erste Übertragungseinrichtung zwei Kurbelwellen aufweist, mit denen über jeweilige Primärkompensatoren nach dem Kniehebelprinzip eine jeweilige Kraft von der ersten Übertragungseinrichtung auf eine jeweilige Formenhälfte der ersten Reihe in zwei im Abstand voneinander stehenden Bereichen ausübbar ist, so dass auf die Formenhälften eine gleichmäßige Kraft ausgeübt werden kann, ohne ein Kippmoment zu erzeugen.

Ein Kniehebel setzt sich aus mindestens zwei durch Gelenke verbundenen Hebelelementen zusammen. Dieses Prinzip ermöglicht es, gemäß dem Hebelgesetz, einen langen Bewegungsweg mit niedriger Zug- oder Druckkraft in einen kurzen Weg mit hoher Kraft zu verwandeln und umgekehrt, was als Kraftverstärkung bekannt ist. Das charakteristische Merkmal des Kniehebels ist die kontinuierliche Änderung des Verhältnisses von eingesetzter zu erzielter Kraft während der Bewegung. Parallel dazu verändert sich auch das Verhältnis von primärem zu sekundärem Hubweg, allerdings in umgekehrt proportionalem Verhältnis zur Kraft: Im angewinkelten Zustand bietet der Kniehebel eine hohe Wegübersetzung bei niedriger Kraftübersetzung. Mit der Streckung des Kniehebels nimmt die Geschwindigkeit des Hubs bei konstanter Betätigungsgeschwindigkeit ab, während die Kraft deutlich steigt. Im vollständig gestreckten Zustand kann die mittels des Kniehebels übertragene Kraft daher sehr groß werden.

Gemäß einer bevorzugten Weiterbildung der Erfindung gilt weiterhin, dass die Formenhalter Halteeinsätze zum Halten der Formenhälften und Halteeinrichtungen aufweisen, mit denen die Halteeinsätze an unterschiedlichen Stellen am Formenhalter befestigt werden können. Da die Krafteinleitungspunkte in die Formen je nach Formenhöhe variieren, gibt es bei konventionellen Schließmechanismen unterschiedlich hohe Formenhalter, die die Kraft entsprechend an die Formenhälften übertragen. Dabei ist es notwendig, für alle verwendeten Formenhöhen entsprechende Formenhalter vorrätig zu haben, was hohe Material- und Lagerkosten verursacht. Bei der vorliegend beschriebenen bevorzugten Ausführungsform der Erfindung sind Halteeinsätze für die Formenhälften vorgesehen, die sich variabel in der Höhe verstellen lassen. Dadurch ist es möglich, verschiedene Formengrößen mit nur einem Formenträger zu gewährleisten, was die Teilevielfalt deutlich reduziert. Je nach Formenhöhe werden z. B. nur ein Halteeinsatz oder zwei Halteeinsätze verwendet.

Vorzugweise ist dabei zumindest ein Teil der Halteeinsätze mit einem Kühlluftkanal ausgestattet, durch den hindurch einer jeweiligen Formenhälfte Kühlluft zuführbar ist. Kühlluft wird dabei von Kühlluftkanäle in dem Formenhalter an einen jeweiligen Kühlluftkanal in einem Halteeinsatz weitergeleitet, von wo aus die Kühlluft in Kühlluftkanäle gelangt, die in Außenwandungen der Formenhälften verlaufen.

Zuvor ist immer die Rede davon gewesen, dass der Formenschließmechanismus eine erste Übertragungseinrichtung aufweist. Vorzugsweise gilt jedoch, dass der Formenschließmechanismus auch eine zweite Übertragungseinrichtung aufweist, mit dem auf die Formenhälften der zweiten Reihen eine Kraft zum Zusammenführen der beiden Reihen ausübbar ist, wobei zwischen der zweiten Übertragungseinrichtung und den Formenhälften der zweiten Reihe ebenfalls elastische Primärkompensatoren angeordnet sind. Beim Öffnen und Schließen der Formen wird vorzugsweise also nicht nur die erste Reihe von Formenhälften bewegt. Vielmehr wird auch die zweite Reihe von Formenhälften zum Öffnen und Schließen auf die erste Reihe von Formenhälften zu bzw. von dieser weg bewegt. Dabei gilt, dass die zuvor beschriebenen bevorzugten Ausgestaltungen für die erste Reihe genauso für die zweite Reihe gelten. Im Übrigen werden vorzugsweise für beide Reihen ein gemeinsamer Servomotor und ein gemeinsames Schneckengetriebe verwendet.

Es wird auch offenbart eine Verwendung einer zuvor beschriebenen Formenanordnung, bei der der Übergang von der Stellung der einander zugeordneten Formenhälften im Abstand zueinander zu der Stellung, in der einander zugeordnete Formenhälften eine geschlossene Form bilden, in weniger als 250 ms, vorzugsweise in weniger als 210 ms, durchgeführt wird. Es wird auch offenbart eine Verwendung einer zuvor beschriebenen Formenanordnung, bei der mit der Übertragungseinrichtung eine Kraft von wenigstens 14 kN, vorzugsweise von wenigstens 20 kN, übertragen wird. Durch das schnelle Schließen der Formenhälften und der hohen Kraft, mit denen diese bei einer solchen Verwendung aufeinandertreffen, entstehen Spannungsspitzen, die zu einem erhöhten Verschleiß in der gesamten Kinematik führen. Durch die Flexibilität der Kompensatoren werden diese Spannungsspitzen gedämpft und der Verschleiß wird minimiert.

Durch die Verwendung der Primärkompensatoren als flexible Elemente im Antriebsstrang ist es durch deren Elastizität möglich, beim Schließen der Formen über den oberen Totpunkt hinaus zu fahren. Wie bei den Kolben eines Verbrennungsmotors wird nach dem Überfahren des Totpunktes die Bewegungsrichtung der Formen umgekehrt und diese fahren wieder auf. Damit wird eine einheitliche Drehrichtung des Schneckenrads und der Schneckenwelle ermöglicht, so dass diese Komponenten nur einseitig belastet werden, wodurch der Verschleiß verringert und Umkehrspiel vermieden wird

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch eine Formenanordnung für eine IS-Maschine gemäß einem bevorzugten Ausführungsbeispiel der Erfindung in einer perspektivischen Ansicht,
- Fig. 2: schematisch eine Detailansicht aus Fig. 1,
- Fig. 3: schematisch eine weitere Detailansicht aus Fig. 1,
- Fig. 4a: schematisch einen Formenhalter aus Fig. 1 in einer Explosionsdarstellung und
- Fig. 4b: schematisch den Formenhalter aus Fig. 4a im zusammengebauten Zustand.

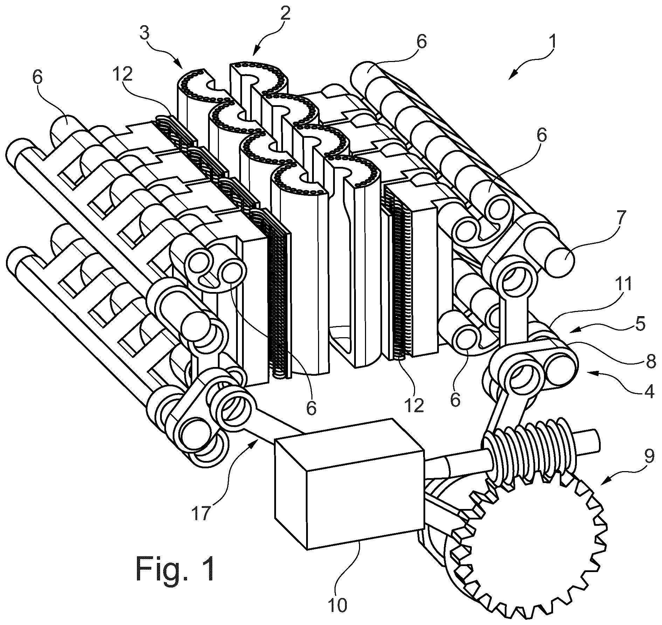

Aus Fig. 1 ist schematisch eine Formenanordnung 1 für eine IS-Maschine gemäß einem bevorzugten Ausführungsbeispiel der Erfindung in einer perspektivischen Ansicht ersichtlich. Vorliegend handelt es sich bei den Formen der Formanordnung 1 um Fertigformen der IS-Maschine. Die Formenanordnung weist eine erste Reihe von Formenhälften 2 und eine zweite Reihe von Formenhälften 3 auf, wobei die Formenhälften 2, 3 der beiden Reihen einander gegenüberstehen und dabei jeweils eine Formenhälfte 2 der ersten Reihe und eine Formenhälfte 3 der zweiten Reihe in einem solchen Sinne einander zugeordnet sind, als dass sie gemeinsam eine geschlossene Form bilden können. Weiterhin ist ein Formenschließmechanismus 4 vorgesehen, mit dem die Formenhälften 2 der ersten Reihe und die Formenhälften 3 der zweiten Reihe reversibel bewegt werden können. Und zwar können die Formenhälften 2, 3 von einer Stellung, in der sie im Abstand zueinander stehen, in der die von den beiden einander zugeordneten Formenhälften 2, 3 gebildete Form also geöffnet ist, zu einer Stellung zusammengeführt werden, in der die einander zugeordneten Formenhälften 2, 3 eine geschlossene Form bilden, so dass diese für einen Glasformungsprozess genutzt werden kann.

Der Formenschließmechanismus 4 ist nun so ausgebildet, dass er eine erste Übertragungseinrichtung 5, mit der auf die Formenhälften 2 der ersten Reihe eine Kraft zum Zusammenführen der Formenhälften 2, 3 der beiden Reihen ausgeübt werden kann, und eine zweite Übertragungseinrichtung 17 aufweist, mit dem auf die Formenhälften 3 der zweiten Reihe eine Kraft zum Zusammenführen der Formenhälften 2, 3 der beiden Reihen ausgeübt wird, wobei zwischen der ersten Übertragungseinrichtung 5 und den Formenhälften 2 der ersten Reihe und auch zwischen der zweiten Übertragungseinrichtung 5 und den Formenhälften 3 der zweiten Reihe Primärkompensatoren 6 angeordnet sind, die beim Zusammenführen der Formenhälften 2, 3 der beiden Reihen elastisch verformt werden.

Die erste Übertragungseinrichtung 5 weist zwei Kurbelwellen 7, 11 auf, mit denen über jeweilige Primärkompensatoren 6 nach dem Kniehebelprinzip eine jeweilige Kraft von der ersten Übertragungseinrichtung 5 auf die Formenhälften 2 der ersten Reihe in zwei im Abstand voneinander stehenden Bereichen ausgeübt werden kann, nämlich einerseits in einem oberen Bereich und andererseits in einem unteren Bereich, so dass es bei der Krafteinwirkung auf die Formenhälften 2 zu keinem Kippeffekt kommt. Entsprechendes gilt für die zweite Übertragungseinrichtung 17 die auf die Formenhälften 3 der zweiten Reihe einwirkt. Die Kurbelwellen 7, 11 sind über ein Pleuel 8 antreibbar, wobei das Pleuel 8 über ein Schneckengetriebe 9 mit einem Servomotor 10 gekoppelt ist.

Um einen zuverlässigen Betriebsprozess bei der Verwendung der vorliegenden Fertigformen zu gewährleisten, ist es von Nutzen, dass alle Formenhälften 2, 3 einheitlich und mit einer festgelegten Minimalkraft schließen. Allerdings können aufgrund von Fertigungstoleranzen und unterschiedlichen Wärmeausdehnungen Situationen entstehen, in denen nicht alle Paare der Formenhälften 2, 3 gleichzeitig schließen. Ohne die Flexibilität von Primärkompensatoren 6, also in einem unflexiblen System, würden lediglich die Formenhälften 2, 3, die sich als erste berühren, korrekt schließen, während die übrigen möglicherweise keinen Kontakt mehr zueinander finden. Die Einführung von Primärkompensatoren 6 verhindert dieses Problem, indem sie es ermöglichen, dass sich die Primärkompensatoren 6 der zuerst berührenden Formenhälften 2, 3 stärker verformen als jene, die später in Kontakt kommen.

Darüber hinaus kompensieren die Primärkompensatoren 6 ähnlich der Toleranzausgleichung auch den Verschleiß der Formenhälften 2, 3 beim Schließen. Unterschiedliche Abnutzungsintensitäten an den Trennfugen der Formenhälften 2, 3 führen zu variierenden Schließzeitpunkten. Wie bereits erläutert, könnte in einem unflexiblen System ein ordnungsgemäßes Schließen aller Formenhälften 2, 3 nicht sichergestellt werden. Die Verwendung der Primärkompensatoren 6 vermeidet dieses Problem durch ihre Elastizität.

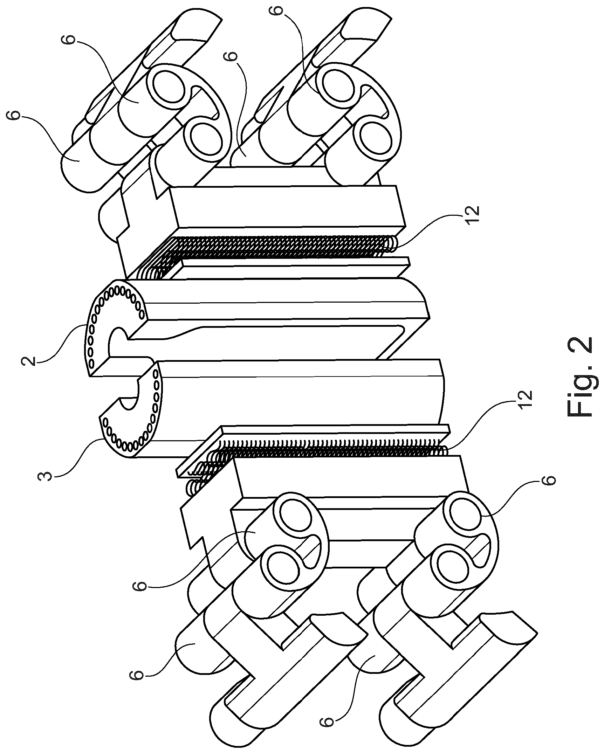

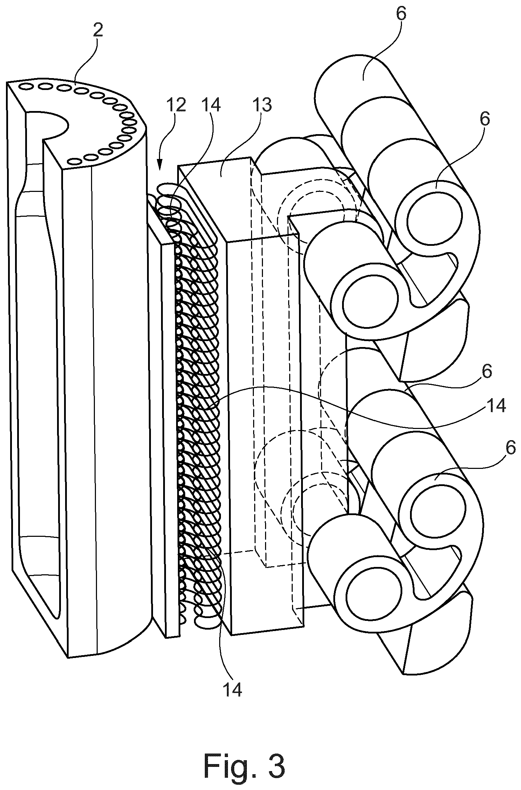

Insbesondere aus den Fig. 2 und 3 ist ersichtlich, dass die Formenhälften 2 der ersten Reihe jeweils unter Zwischenschaltung eines weiteren Kompensators, nämlich eines Sekundärkompensators 12, an einem Formenhalter 13 befestigt sind, wobei die Formenhalter 13 ihrerseits zur Kraftübertragung mit Primärkompensatoren 6 gekoppelt sind und die Sekundärkompensatoren 12 beim Zusammenführen der Formenhälften 2, 3 der beiden Reihen ebenfalls elastisch verformt werden können. Fig. 3 zeigt dabei, dass die Sekundärkompensatoren 12 jeweils eine Mehrzahl von Einzelkompensatoren 14 aufweisen, so dass über die Anzahl der Einzelkompensatoren 14 die auf eine jeweilige Formenhälfte 2, 3 übertragene Kraft eingestellt werden kann. Die Einzelkompensatoren 14 bestehen vorliegend aus metallischen Omega-Federn.

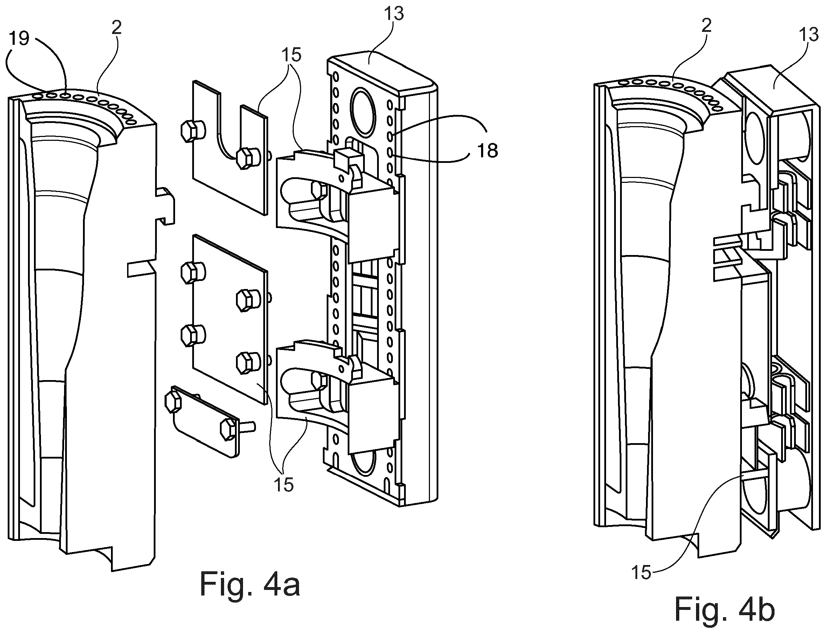

Insbesondere den Fig. 4a und 4b ist entnehmbar, dass die Formenhalter 13 Halteeinsätze 15 zum Halten der Formenhälften 2, 3 und 13 Halteeinrichtungen 16 aufweisen, mit denen die Halteeinsätze 15 an unterschiedlichen Stellen am Formenhalter 13 befestigt werden können. Bei herkömmlichen Schließmechanismen müssen aufgrund der variierenden Höhe der Formen und der entsprechenden Krafteinleitungspunkte unterschiedlich große Formenhalter eingesetzt werden, um die Kraft adäquat auf die Formenhälften zu übertragen. Dies erfordert, eine Vielzahl von Formenhaltern für alle möglichen Formenhöhen vorzuhalten, was wiederum erhebliche Material- und Lagerkosten nach sich zieht. In der hier beschriebenen bevorzugten Variante der Erfindung sind jedoch derartige Halteeinsätze 15 für die Formenhälften 2, 3 vorgesehen, die sich hinsichtlich ihrer Installationsposition anpassen lassen. Dadurch können mit nur einem Formenhalter 13 verschiedene Formgrößen genutzt werden, was die Notwendigkeit einer großen Auswahl an Teilen erheblich verringert. Abhängig von der Höhe einer Formenhälfte 2, 3 werden dabei entweder ein einzelner Halteeinsatz 15 oder mehrere Halteeinsätze 15 verwendet. Aus Kühlluftkanälen 18 in dem Formenhalter 13 wird durch einen Halteeinsatz 15 hindurch einer jeweiligen Formenhälfte 2, 3 Kühlluft zugeführt. Kühlluft wird also von den Kühlluftkanälen 18 in dem Formenhalter 13 an Kühlluftkanäle 19 weitergeleitet, die in Außenwandungen der Formenhälften 2, 3 verlaufen, um auf diese Weise die Formenhälften 2, 3 zu kühlen.

Beim Betrieb der vorliegend beschriebenen Formenanordnung 1 gilt, dass der Übergang von der Stellung, in der die einander zugeordneten Formenhälften 2, 3 im Abstand zueinander stehen, zu der Stellung, in der die einander zugeordneten Formenhälften 2, 3 eine geschlossene Form bilden, in etwa 200 ms erfolgt. Im Übrigen wird mit der ersten Übertragungseinrichtung 5 und der zweiten Übertragungseinrichtung 17 jeweils eine Kraft von 21 kN übertragen. Das rasche Zusammenpressen der Formhälften 2, 3 mit hoher Intensität verursacht Spannungsmaxima, die einen verstärkten Abrieb in der gesamten Bewegungsmechanik nach sich ziehen. Die Elastizität der Kompensatoren 6, 12 trägt dazu bei, diese Spannungsmaxima zu mildern und somit den Verschleiß zu reduzieren.

Die Nutzung von Primärkompensatoren 6 als anpassungsfähige Bauteile im Antriebssystem ermöglicht es dank ihrer Flexibilität, die Formen über den höchsten Punkt hinaus zu bewegen. Ähnlich wie bei den Kolben eines Verbrennungsmotors kehrt sich nach dem Überschreiten dieses Punktes die Bewegungsrichtung der Formenhälften 2, 3 um, und sie öffnen sich wieder. Dies gestattet eine konstante Drehbewegung des Schneckenrads und der Schneckenwelle des Schneckengetriebes 9, wobei diese Bauteile lediglich auf einer Seite beansprucht werden. Folglich wird der Abnutzungsgrad reduziert und das Umkehrspiel eliminiert.

### Bezugszeichenliste

- 1: Formenanordnung
- 2: erste Reihe von Formenhälften
- 3: zweite Reihe von Formenhälften
- 4: Formenschließmechanismus
- 5: erste Übertragungseinrichtung
- 6: Primärkompensatoren
- 7: Kurbelwelle
- 8: Pleuel
- 9: Schneckengetriebe
- 10: Servomotor
- 11: zweite Kurbelwellen
- 12: Sekundärkompensator
- 13: Formenhalter
- 14: Einzelkompensatoren
- 15: Halteeinsätze
- 16: Halteeinrichtungen
- 17: zweite Übertragungseinrichtung
- 18: Kühlluftkanäle im Formenhalter
- 19: Kühlluftkanälen in einer Formenhälfte

## Patentansprüche

1. Formenanordnung (1) für eine IS-Maschine, mit
einer ersten Reihe von Formenhälften (2) und einer zweiten Reihe von Formenhälften (3),
wobei die Formenhälften (2, 3) der beiden Reihen einander gegenüberstehen und dabei jeweils eine Formenhälfte (2) der ersten Reihe und eine Formenhälfte (3) der zweiten Reihe in einem solchen Sinne einander zugeordnet sind, als dass sie gemeinsam eine geschlossene Form bilden können, und
einem Formenschließmechanismus (4), mit dem die Formenhälften (2) der ersten Reihe und die Formenhälften (3) der zweiten Reihe reversibel von einer Stellung einander zugeordneter Formenhälften (2, 3) im Abstand zueinander zu einer Stellung zusammengeführt werden können, in der einander zugeordnete Formenhälften (2, 3) eine geschlossene Form bilden,
wobei der Formenschließmechanismus (4) eine erste Übertragungseinrichtung (5) aufweist, mit der auf die Formenhälften (2) der ersten Reihe eine Kraft zum Zusammenführen der Formenhälften (2, 3) der beiden Reihen ausübbar ist, und
zwischen der ersten Übertragungseinrichtung (5) und den Formenhälften (2) der ersten Reihe Primärkompensatoren (6) angeordnet sind, die beim Zusammenführen der Formenhälften (2, 3) der beiden Reihen elastisch verformbar sind,
wobei die Formenhälften (2) der ersten Reihe jeweils unter Zwischenschaltung eines Sekundärkompensators (12) an einem Formenhalter (13) befestigt sind, wobei die Formenhalter (13) ihrerseits zur Kraftübertragung mit Primärkompensatoren (6) gekoppelt sind und die Sekundärkompensatoren (12) beim Zusammenführen der Formenhälften (2, 3) der beiden Reihen ebenfalls elastisch verformbar sind.

2. Formenanordnung (1) nach Anspruch 1, wobei die erste Übertragungseinrichtung (5) eine Kurbelwelle (7) aufweist und die Primärkompensatoren (6) derart ausgestaltet sind, dass die Kurbelwelle (7) zusammen mit den Primärkompensatoren (6) als Kniehebel wirkt, mit dem eine Kraft von der ersten Übertragungseinrichtung (5) auf die Formenhälften (2) der ersten Reihe ausübbar ist.

3. Formenanordnung nach Anspruch 2, wobei die Kurbelwelle (7) über ein Pleuel (8) antreibbar ist.

4. Formenanordnung (1) nach Anspruch 3, wobei das Pleuel (8) über ein Schneckengetriebe (9) mit einem Servomotor (10) gekoppelt ist.

5. Formenanordnung (1) nach einem der Ansprüche 2 bis 4, wobei die erste Übertragungseinrichtung (5) zwei Kurbelwellen (7, 11) aufweist, mit denen über jeweilige Primärkompensatoren (6) nach dem Kniehebelprinzip eine jeweilige Kraft von der ersten Übertragungseinrichtung (5) auf die Formenhälften (2) der ersten Reihe in zwei im Abstand voneinander stehenden Bereichen ausübbar ist.

6. Formenanordnung (1) nach einem der Ansprüche 1 bis 5, wobei die Sekundärkompensatoren (12) jeweils eine Mehrzahl von Einzelkompensatoren (14) aufweisen und über die Anzahl der Einzelkompensatoren (14) die auf eine jeweilige Formenhälfte (2, 3) übertragene Kraft einstellbar ist.

7. Formenanordnung (1) nach einem der Ansprüche 1 bis 6, wobei die Formenhalter (13) Halteeinsätze (15) zum Halten der Formenhälften (2, 3) und (13) Halteeinrichtungen (16) aufweisen, mit denen die Halteeinsätze (15) an unterschiedlichen Stellen am Formenhalter (13) befestigt werden können.

8. Formenanordnung (1) nach Anspruch 7, wobei zumindest ein Teil der Halteinsätze (15) mit einem Kühlluftkanal ausgestattet ist, durch den hindurch einer jeweiligen Formenhälfte (2, 3) Kühlluft zugeführt werden kann.

9. Formenanordnung (1) nach einem der vorhergehenden Ansprüche, wobei der Formenschließmechanismus (4) eine zweite Übertragungseinrichtung (17) aufweist, mit dem auf die Formenhälften (3) der zweiten Reihe eine Kraft zum Zusammenführen der Formenhälften (2, 3) der beiden Reihen ausübbar ist, wobei zwischen der zweiten Übertragungseinrichtung (17) und den Formenhälfte (3) der zweiten Reihe elastische Primärkompensatoren (6) angeordnet sind.

10. Formenanordnung (1) nach einem der vorhergehenden Ansprüche, wobei einander zugeordnete Formenhälfte (2, 3) gemeinsam eine Vorform oder eine Fertigform bilden.

## Claims

1. A mould assembly (1) for an IS machine, comprising
a first row of mould halves (2) and a second row of mould halves (3),
wherein the mould halves (2, 3) in the two rows face one another and, in each case, a mould half (2) in the first row and a mould half (3) in the second row are paired with one another such that they together may form a closed mould, and
a mould closing mechanism (4), by which the mould halves (2) in the first row and the mould halves (3) in the second row may be brought together reversibly from a position in which paired mould halves (2, 3) are at a distance from one another to a position in which paired mould halves (2, 3) form a closed mould,
wherein the mould closing mechanism (4) has a first transfer device (5), by which a force for bringing together the mould halves (2, 3) in the two rows is exertable onto the mould halves (2) in the first row, and
primary compensators (6) are arranged between the first transfer device (5) and the mould halves (2) in the first row and are elastically deformable as the mould halves (2, 3) in the two rows are brought together,
wherein the mould halves (2) in the first row are each secured to a mould holder (13) with a secondary compensator (12) arranged in between, wherein the mould holders (13) are, in turn, coupled to primary compensators (6) for force transfer and the secondary compensators (12) likewise are elastically deformable as the mould halves (2, 3) in the two rows are brought together.

2. The mould assembly (1) according to claim 1, wherein the first transfer device (5) has a crankshaft (7) and the primary compensators (6) are formed in such a way that the crankshaft (7) together with the primary compensators (6) acts as a toggle lever, by which a force is exertable by the first transfer device (5) onto the mould halves (2) in the first row.

3. The mould assembly according to claim 2, wherein the crankshaft (7) is driveable via a connecting rod (8).

4. The mould assembly (1) according to claim 3, wherein the connecting rod (8) is coupled to a servomotor (10) via a worm gear (9).

5. The mould assembly (1) according to any one of claims 2 to 4, wherein the first transfer device (5) has two crankshafts (7, 11), by which a respective force is exertable by the first transfer device (5) onto the mould halves (2) in the first row in two spaced-apart regions via respective primary compensators (6) according to the toggle lever principle.

6. The mould assembly (1) according to any one of claims 1 to 5, wherein the secondary compensators (12) each have a plurality of individual compensators (14) and the force transferred to a respective mould half (2, 3) is adjustable via the number of individual compensators (14).

7. The mould assembly (1) according to any one of claims 1 to 6, wherein the mould halves (13) have holding inserts (15) for holding the mould halves (2, 3) and holding devices (16) by which the holding inserts (15) may be secured at different points on the mould holder (13).

8. The mould assembly (1) according to claim 7, wherein at least a part of the holding inserts (15) is equipped with a cooling air channel, through which cooling air may be supplied to a respective mould half (2, 3).

9. The mould assembly (1) according to any one of the preceding claims, wherein the mould closing mechanism (4) has a second transfer device (17), by which a force for bringing together the mould halves (2, 3) in the two rows is exertable onto the mould halves (3) in the second row, wherein elastic primary compensators (6) are arranged between the second transfer device (17) and the mould halves (3) in the second row.

10. The mould assembly (1) according to any one of the preceding claims, wherein mould halves (2, 3) paired with one another together form a preliminary mould or a finished mould.

## Revendications

1. Agencement de moules (1) pour une machine IS, avec
une première rangée de demi-moules (2) et une deuxième rangée de demi-moules (3),
dans lequel les demi-moules (2, 3) des deux rangées se font face, et respectivement un demi-moule (2) de la première rangée et un demi-moule (3) de la deuxième rangée sont associés l'un à l'autre de telle sorte qu'ils peuvent former conjointement un moule fermé, et
un mécanisme de fermeture de moule (4), avec lequel les demi-moules (2) de la première rangée et les demi-moules (3) de la deuxième rangée peuvent être rapprochés de manière réversible depuis une position des demi-moules (2, 3) associés espacés les uns des autres jusqu'à une position dans laquelle les demi-moules (2, 3) associés forment un moule fermé,
dans lequel le mécanisme de fermeture de moule (4) présente un premier dispositif de transmission (5), avec lequel une force destinée à rapprocher les demi-moules (2, 3) des deux rangées peut être exercée sur les demi-moules (2) de la première rangée, et
des compensateurs primaires (6), qui peuvent être déformés élastiquement lors du rapprochement des demi-moules (2, 3) des deux rangées, sont agencés entre le premier dispositif de transmission (5) et les demi-moules (2) de la première rangée,
dans lequel les demi-moules (2) de la première rangée sont chacun fixés à un porte-moule (13) par l'intermédiaire d'un compensateur secondaire (12), dans lequel les porte-moules (13) sont eux-mêmes accouplés aux compensateurs primaires (6) pour transmettre la force, et les compensateurs secondaires (12) peuvent également être déformés élastiquement lors du rapprochement des demi-moules (2, 3) des deux rangées.

2. Agencement de moules (1) selon la revendication 1, dans lequel le premier dispositif de transmission (5) présente un vilebrequin (7) et les compensateurs primaires (6) sont conçus de telle sorte que le vilebrequin (7), conjointement avec les compensateurs primaires (6), agit comme une genouillère avec laquelle une force peut être exercée par le premier dispositif de transmission (5) sur les demi-moules (2) de la première rangée.

3. Agencement de moules selon la revendication 2, dans lequel le vilebrequin (7) peut être entraîné via une bielle (8).

4. Agencement de moules (1) selon la revendication 3, dans lequel la bielle (8) est accouplée à un servomoteur (10) via un engrenage à vis sans fin (9).

5. Agencement de moules (1) selon l'une des revendications 2 à 4, dans lequel le premier dispositif de transmission (5) présente deux vilebrequins (7, 11), avec lesquels, via des compensateurs primaires (6) respectifs selon le principe de la genouillère, une force respective peut être exercée par le premier dispositif de transmission (5) sur les demi-moules (2) de la première rangée dans deux zones espacées l'une de l'autre.

6. Agencement de moules (1) selon l'une des revendications 1 à 5, dans lequel les compensateurs secondaires (12) présentent chacun une pluralité de compensateurs individuels (14), et la force transmise à un demi-moule (2, 3) respectif peut être réglée via le nombre de compensateurs individuels (14).

7. Agencement de moules (1) selon l'une des revendications 1 à 6, dans lequel les porte-moules (13) présentent des inserts de maintien (15) destinés à maintenir les demi-moules (2, 3) et (13) des dispositifs de maintien (16), avec lesquels les inserts de maintien (15) peuvent être fixés en différents endroits sur le porte-moule (13).

8. Agencement de moules (1) selon la revendication 7, dans lequel au moins une partie des inserts de maintien (15) est équipée d'un canal d'air de refroidissement à travers lequel de l'air de refroidissement peut être acheminé jusqu'à un demi-moule (2, 3) respectif.

9. Agencement de moules (1) selon l'une des revendications précédentes, dans lequel le mécanisme de fermeture de moule (4) présente un deuxième dispositif de transmission (17), avec lequel une force destinée à rapprocher les demi-moules (2, 3) des deux rangées peut être exercée sur les demi-moules (3) de la deuxième rangée, dans lequel des compensateurs primaires élastiques (6) sont agencés entre le deuxième dispositif de transmission (17) et les demi-moules (3) de la deuxième rangée.

10. Agencement de moules (1) selon l'une des revendications précédentes, dans lequel des demi-moules (2, 3) associés forment conjointement un moule ébaucheur ou un moule finisseur.
